# EUROPEAN PATENT SPECIFICATION

(11) **EP 3 614 894 B1**
(45) Date of publication and mention of the grant of the patent: **14.04.2021**
(21) Application number: 19721151.9
(22) Date of filing: 29.03.2019
(51) Int. Cl.: A47J 42/38

(54) **GRINDING APPARATUS AND METHOD**
SCHLEIFVORRICHTUNG UND -VERFAHREN
APPAREIL ET PROCÉDÉ DE BROYAGE

(30) Priority: 30.03.2018 IT 201800004111
(43) Date of publication of application: 04.03.2020
(73) Proprietor: Girardi S.R.L., 30038 Spinea (IT)
(72) Inventor: GIRARDI, Egidio, 30174 VENEZIA (IT)
(74) Representative: Petraz, Gilberto Luigi
(86) International application number: PCT/IT2019/050069
(87) International publication number: WO 2019/186612

(56) References cited:
- EP-A1- 3 295 843
- WO-A1-2014/045230
- WO-A1-2017/055433

## Description

### FIELD OF THE INVENTION

The present invention concerns a grinding apparatus and method and, in particular but not exclusively, an electric grinding apparatus suitable to grind coffee beans, or other product, in particular a granular product, so as to obtain a ground product, for example a ground powder product.

### BACKGROUND OF THE INVENTION

Known grinding apparatuses, for example electric coffee grinders, generally comprise a main body provided at the upper part with a hopper where the product to be ground is loaded, a motor located in the lower part in the main body and a grinding device located in a central zone of the apparatus.

The grinding device is positioned in a grinding chamber and can comprise grinders or grinding wheels which can have any shape, for example they can have a conical shape or a flat shape, and the ground product can exit from an unloading mouth located downstream of the grinding device.

The grinding device can comprise a fixed grinder and a mobile grinder, below which blades can be made which have the purpose of generating an unloading action of the ground product from the grinding chamber both by mechanical action, that is, by contact, and also by means of an air flow generated in the grinding chamber. In this way the discharge of the dust that is generated in the unloading compartment of the grinding chamber is obtained.

The blades are suitably shaped to generate the unloading action of the ground product when the mobile grinder is made to rotate and engages on the fixed grinder to grind the product introduced by the hopper.

The removal of the dust or of the ground residues obtained by means of the concave blades associated with the mobile grinder occurs only when the mobile grinder engages on the fixed grinder, that is, when the grinding device is driven to grind the product.

Furthermore, it is normally provided that the mobile grinder can rotate only in the direction of rotation in which the corresponding grinding teeth engage with the grinding teeth of the fixed grinder.

Therefore, in known machines, a certain amount of ground product residues always remains in the unloading compartment of the ground product and, naturally, the presence of such residues in the unloading compartment and therefore in the grinding chamber should be avoided or at least limited as much as possible.

This disadvantage is more emphasized and undesirable for continuous load grinding machines or apparatuses, which therefore grind substantially continuously quantities of coffee or other product to be ground. This disadvantage is in any case harmful and undesirable even for grinding machines or apparatuses suitable to grind single doses of coffee, that is, grind predefined quantities of coffee beans.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

For example WO 2014/045230 A1 discloses a grinding machine, comprising a cleaning device, wherein the mobile grinding disc continues to rotate after grinding, in order to discharge remaining ground residues. WO 2017/055433 A1 discloses a grinder, wherein the control unit is configured to start the motor in the inverse direction, in order to reduce starting torque. EP 3 295 843 A1 shows a standard grinder of the disc type.

There is therefore the need to perfect a grinding apparatus and method which can overcome at least one of the disadvantages of the state of the art.

One purpose of the present invention is to provide a grinding apparatus which allows, in a practical and economical manner, to eliminate or at least drastically reduce the presence of possible residues of ground product which tend to deposit in the grinding chamber during the normal grinding process, and remain there even after the end of the grinding process, and which can therefore be used effectively, in particular but not exclusively, for the continuous grinding of coffee, or other product to be ground, for example a granular product.

Another purpose of the present invention is to provide a grinding apparatus which effectively allows to remove the residues of ground product at least from the grinding chamber without entailing significant and complex structural interventions on parts of the apparatus itself.

Another purpose of the present invention is to provide a grinding apparatus which allows to effectively and practically remove the residues of ground product automatically and not only during the normal grinding process, but also and even more effectively at the end of the grinding process itself.

Another purpose of the present invention is to perfect an effective and precise grinding method, by means of which precise quantities of ground product can be obtained, advantageously limiting product waste.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus for grinding a product initially in the form of granules, grains or suchlike, according to the invention, comprises: a receptacle to contain the product to be ground and provided with an unloading aperture; a fixed grinder; a mobile grinder connectable to a drive motor; a grinding chamber in which the fixed grinder and the mobile grinder are located and provided with a discharge aperture to discharge the ground product; the grinding chamber, the fixed grinder and the mobile grinder define a reception compartment, put in communication with the unloading aperture, and an unloading compartment, separated from the reception compartment by means of grinding teeth of the fixed and mobile grinders and put in communication with the discharge aperture.

According to one aspect of the invention, the grinding apparatus comprises at least a cleaning device, associated with the mobile grinder, and at least a control unit, provided with commutation means and associated with the drive motor so as to make the mobile grinder rotate in a first direction of rotation which is mainly for grinding or, alternatively, in a second direction of rotation for cleaning, opposite to the first direction of rotation and suitable to allow the discharge of ground residues present in the unloading chamber by means of the cleaning device.

Advantageously, by means of the cleaning device associated with the mobile grinder and the control unit provided with commutation means, the mobile grinder can rotate in a first direction of rotation or in a second direction of rotation opposite to the first, in order to carry out both an effective grinding and also an effective cleaning of what was previously ground and present in the unloading compartment. The cleaning device, in fact, generates in both directions of rotation a suitable unloading action, which can occur both through direct contact with the ground powders and also through the air flow that the cleaning device generates. The cleaning takes place in particular, but not exclusively, when the grinder is made to rotate in the opposite direction to the grinding direction.

The cleaning device can comprise at least one cleaning blade which is integrally associated with the mobile grinder. The cleaning blade can have a conformation that is symmetrical with respect to a radial direction of the cleaning device.

The cleaning blade can comprise at least a cleaning part positioned under the mobile grinder and able to facilitate the cleaning of the bottom of the unloading compartment.

The cleaning blade can comprise at least a cleaning part protruding radially with respect to the cleaning device and able to facilitate the cleaning of a lateral wall of the unloading compartment.

The cleaning device can comprise a plurality of cleaning blades distanced equally from each other.

The cleaning device can comprise three cleaning blades reciprocally distanced at an angle of about 120°.

The cleaning device can comprise an annular support removably connectable to the mobile grinder.

Another purpose of the invention is a grinding method comprising: a step of introducing the product to be ground into the receptacle located upstream of the fixed grinder and of the mobile grinder with which the cleaning device is associated; at least a step of mainly grinding the product to be ground by means of the rotation of the mobile grinder with respect to the fixed grinder in a first direction of rotation; and at least a step of cleaning the unloading compartment of residues of ground product by means of rotation of the mobile grinder with which the cleaning device is associated, in a second direction of rotation opposite to the first direction of rotation.

The passage from the mainly grinding step in the first direction of rotation of the mobile grinder to the cleaning step in the second direction of rotation occurs automatically when the mobile grinder stops rotating in the first direction of rotation.

During the first mainly grinding step the cleaning device is active to facilitate the removal of possible residues of ground product at least from the unloading compartment.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a section view of a grinding apparatus according to the invention;
- fig. 2 is a three-dimensional view of a mobile grinder and a cleaning device applicable to the mobile grinder; and
- fig. 3 is a plan view of the cleaning device;

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

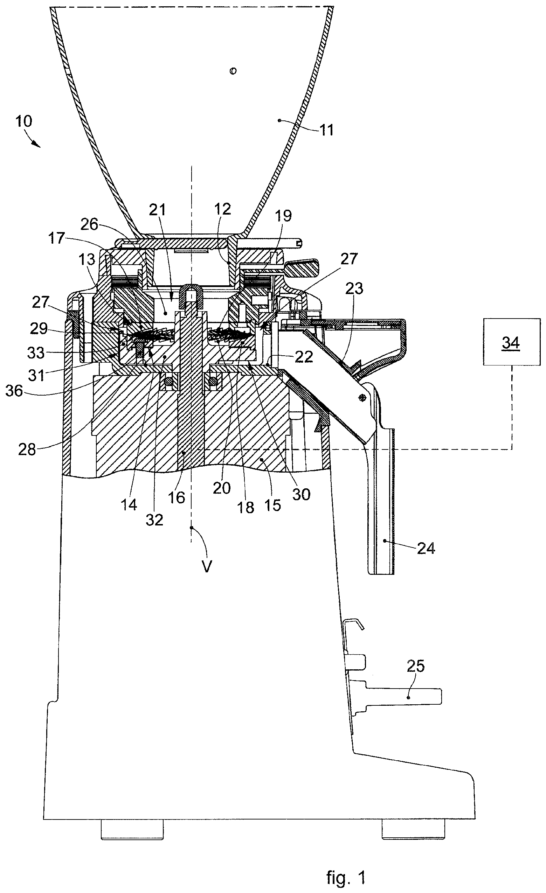

With reference to the attached drawings, see for example fig. 1, an apparatus 10 for grinding a product initially in the form of granules, grains or suchlike, according to the present invention, comprises: a receptacle 11 to contain the product to be ground and provided with an unloading aperture 12. The receptacle 11 can be for example in the form of a hopper or suchlike.

The grinding apparatus 10 also comprises a fixed grinder 13 and a mobile grinder 14 connectable to a drive motor 15. The drive motor 15 is configured to make a shaft 16, to which the mobile grinder 14 is connected, rotate around an axis V, so that the mobile grinder 14 can therefore be made to rotate around the axis V.

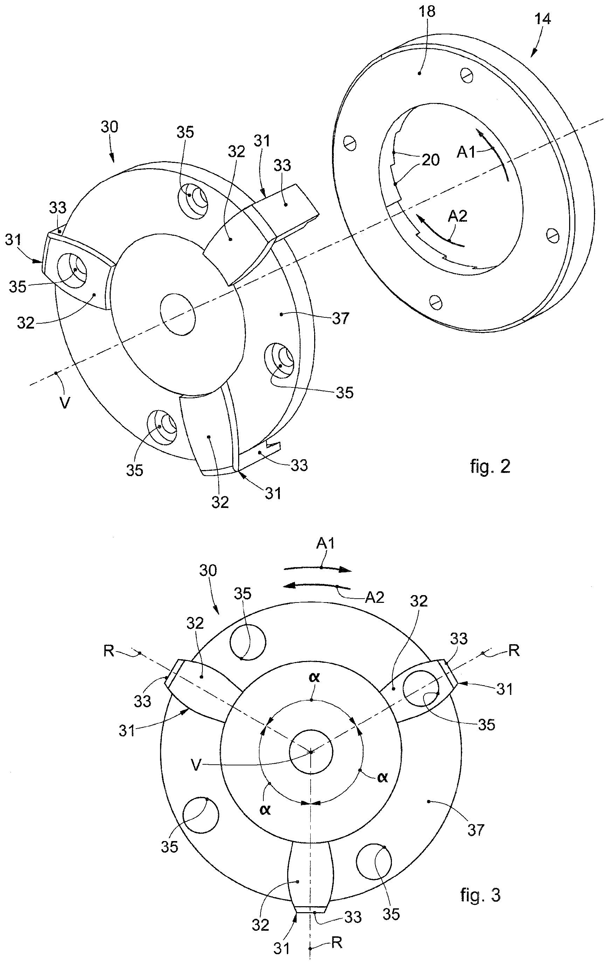

The fixed grinder 13 and the mobile grinder 14 are provided with corresponding supports 17 and 18 on which corresponding grinding teeth 19 and 20 are made, suitable to reciprocally engage in at least one direction of rotation A1, see for example fig. 3, to grind the product introduced into the receptacle 11.

The fixed grinder 13 and the mobile grinder 14 are positioned inside a grinding chamber 21 located downstream of the unloading aperture 12 of the receptacle 11.

The grinding chamber 21 is provided with a discharge aperture 22 to discharge the ground product.

The discharge aperture 22 to discharge the ground product can be associated with a discharge channel 23, possibly provided with a nozzle 24, which can be directed in a direction parallel to the axis V.

The discharge channel 23 and the nozzle 24 are able to allow an effective transfer of the ground product to a collection receptacle which can be positioned for example in correspondence with a support 25 provided in the grinding apparatus 10.

The grinding chamber 21, the fixed grinder 13 and the mobile grinder 14 define a reception compartment 26 communicating with the unloading aperture 12 of the receptacle 11, and an unloading compartment 27 separated from the reception compartment 26 by means of the grinding teeth 19 and 20 of the fixed grinder 13 and of the mobile grinder 14.

The ground product, and therefore also the possible ground residues to be removed, is substantially collected in the unloading compartment 27. The unloading compartment 27 is therefore in communication with the discharge aperture 22 to discharge the ground product, including possible ground residues.

The unloading compartment 27 comprises at least a bottom 28 and at least a lateral wall 29, in this case for example of a cylindrical shape or suchlike.

The present grinding apparatus 10 also comprises at least a cleaning device 30, see also fig. 2, associated with the mobile grinder 14 and configured to carry out an effective cleaning of at least the unloading compartment 27, that is, to free the unloading compartment 27 of residues of ground product.

The grinding apparatus 10 also comprises at least a control unit 34 connected to the drive motor 15 of the mobile grinder 14 and provided with commutation means provided to make the mobile grinder 14 rotate in a first direction of rotation A1 which is mainly for grinding and, alternatively, in a second direction of rotation A2 for cleaning, opposite the first direction of rotation A1 and for cleaning, by means of the cleaning device 30, the residues of ground product present in the unloading compartment 27.

Specifically, the commutation means are configured to command the drive of the drive motor 15 in the first direction of rotation A1 and in the second direction of rotation A2.

In the direction of rotation A1, in particular, the grinding teeth 19 and 20 of the fixed and mobile grinders 13 and 14 engage reciprocally so as to grind the product, therefore the direction of rotation A1 is mainly for grinding, however the cleaning device 30 is also active in this direction of rotation A1.

In the direction of rotation A2, the grinding teeth 19 and 20 of the fixed and mobile grinders 13 and 14 do not engage, therefore the product is not ground and therefore the cleaning of the unloading compartment 27 is carried out by means of the cleaning device 30.

The control unit 34 will be provided with an electronic board, or suchlike, and the means to commutate and invert the direction of rotation of the mobile grinder 14 could be managed directly by the electronic board, or they could be made in the form of a double contact relay, or other suitable system that guarantees the inversion in a prompt and effective manner, when commanded by the control unit 34.

The direction of rotation A1 or A2 of the mobile grinder 14 could be established for example by a user interface which the grinding apparatus 10 can be equipped with and provided with a suitable command associated with the control unit 34.

The cleaning device 30 comprises at least a cleaning blade 31 which is symmetrical with respect to a radial direction R of the cleaning device 30, see for example fig. 3.

The cleaning blade 31 of the cleaning device 30 has the function of generating a mechanical action of thrusting and unloading the powders generated and/or an air flow in the unloading compartment which facilitates the transfer of the residues of ground product toward the discharge aperture 22.

The symmetry of the cleaning blade 31 can, advantageously, allow to use the cleaning device 30 indifferently and with the same cleaning efficiency both in a direction of rotation A1, and also in the other direction of rotation A2.

The cleaning blade 31 can comprise at least a cleaning part 32 positioned under the mobile grinder 14 and suitable to clean the bottom 28 of the unloading compartment 27 of residues of ground product.

The cleaning blade 31 can also comprise at least a cleaning part 33 protruding radially with respect to the cleaning device 30, that is, in a radial direction R, and suitable to clean the lateral wall 29 of the unloading compartment 27 of residues of ground product.

In order to guarantee an even more effective cleaning of at least the unloading compartment 27 of the ground product, the cleaning device 30 could comprise a plurality of cleaning blades 31 distanced equally from each other.

One configuration of the cleaning device 30 which has proved to be particularly effective in the cleaning operations of the unloading compartment 27 of residues of ground product, is the one which provides three cleaning blades 31 distanced equally by an angle α of about 120° from each other, see in particular fig. 3.

The cleaning device 30 could also comprise an annular support 37 which can be removably connected to the mobile grinder 14.

In particular, the annular support 37 can be provided with a series of holes 35 in which to insert attachment elements 36, such as screws or suchlike, which will also engage with the support 18 of the mobile grinder 14.

The present grinding apparatus 10 can therefore function in a first direction of rotation, for example the direction of rotation A1, in which the grinding teeth 20 of the mobile grinder 14 engage with the grinding teeth 19 of the fixed grinder 13 and therefore the product passes from the reception compartment 26, located upstream of the fixed and mobile grinders 13 and 14, to the unloading compartment 27, located downstream of the fixed and mobile grinders 13 and 14, and then to the discharge aperture 22.

During grinding in the direction of rotation A1, the cleaning device 30 acts in the unloading compartment 27 to unload the ground product through the discharge aperture 22.

The mobile grinder 14, in addition to the first direction of rotation A1 and thanks to the control unit 34 provided with commutation means, can be made to rotate in the second direction of rotation A2, opposite the first direction of rotation A1.

In this situation, the grinding teeth 19 and 20 of the fixed and mobile grinders 13 and 14 do not engage, therefore no further product is ground; however, advantageously, the cleaning device 30 carries out an effective cleaning of the unloading compartment 27 of the previously produced ground product.

The cleaning device 30, therefore, advantageously, acts in both directions of rotation A1 and A2 to carry out the cleaning operations of the unloading compartment 27.

The inversion of the direction of rotation from A1 to A2, for example, can also be commanded automatically the moment the grinding process in the direction of rotation A1 is stopped, so as to make the cleaning of the unloading compartment and the discharge of residues of ground product from the discharge aperture 22 even more effective and immediate.

It is possible, for example, to provide that in the grinding apparatus 10 a grinding button is provided which starts the rotation which is mainly for grinding, for example in the direction of rotation A1, and that, when the button is turned off, the mobile grinder 14 rotates automatically and for a certain period of time in the direction of rotation for cleaning by means of the cleaning device 30, for example in the direction of rotation A2.

It is clear that modifications and/or additions of parts may be made to the apparatus 10 and method for grinding as described heretofore, without departing from the field and scope of the present invention.

It is also clear that, although the present invention has been described with reference to some specific examples, a person of skill in the art shall certainly be able to achieve many other equivalent forms of apparatus 10 and method for grinding, having the characteristics as set forth in the claims.

In the following claims, the sole purpose of the references in brackets is to facilitate reading: they must not be considered as restrictive factors with regard to the field of protection claimed in the specific claims.

## Claims

1. Apparatus for grinding a product initially in the form of granules, grains or suchlike, comprising: a receptacle (11) to contain the product to be ground and provided with an unloading aperture (12); a fixed grinder (13); a mobile grinder (14) connectable to a drive motor (15); a grinding chamber (21) in which the fixed grinder (13) and the mobile grinder (14) are located and provided with an discharge aperture (22) to discharge the ground product, said grinding chamber (21), said fixed grinder (13) and said mobile grinder (14) defining a reception compartment (26), put in communication with said unloading aperture (12), and an unloading compartment (27), separated from said reception compartment (26) by means of grinding teeth (19, 20) of the fixed and mobile grinders (13, 14) and put in communication with the discharge aperture (22), said grinding apparatus furthermore comprising at least a cleaning device (30), associated with the mobile grinder (14), and at least a control unit (34), being **characterized in that** the control unit is provided with commutation means, and associated with the drive motor (15) so as to make said mobile grinder (14) rotate in a first direction of rotation (A1) which is mainly for grinding and, alternatively, in a second direction of rotation (A2) for cleaning, opposite to the first direction of rotation (A1) and suitable to allow the discharge of ground residues present in the unloading chamber (27) by means of said cleaning device (30).

2. Grinding apparatus as in claim 1, **characterized in that** said cleaning device (30) comprises at least a cleaning blade (31) which is symmetrical with respect to a radial direction (R) of said cleaning device (30).

3. Grinding apparatus as in claim 2, **characterized in that** said cleaning blade (31) comprises at least a cleaning part (32) positioned under the mobile grinder (14) and able to facilitate the cleaning of the bottom (28) of said unloading compartment (27).

4. Grinding apparatus as in claim 2, **characterized in that** said cleaning blade (31) comprises at least a cleaning part (33) protruding radially with respect to said cleaning device (30) and able to facilitate the cleaning of a lateral wall (29) of said unloading compartment (27).

5. Grinding apparatus as in claim 2, **characterized in that** said cleaning device (30) comprises a plurality of cleaning blades (31) distanced equally from each other.

6. Grinding apparatus as in claim 5, **characterized in that** said cleaning device (30) comprises three cleaning blades (31) reciprocally distanced at an angle (α) of about 120°.

7. Grinding apparatus as in claim 1, **characterized in that** said cleaning device (30) comprises an annular support (37) removably connectable to said mobile grinder (14).

8. Grinding method using a grinding apparatus as in any claim hereinbefore, **characterized in that** it comprises: a step of introducing the product to be ground into the receptacle (11) located upstream of the fixed grinder (13) and of the mobile grinder (14) with which the cleaning device (30) is associated; at least a step of mainly grinding the product to be ground by means of the rotation of the mobile grinder (14) with respect to the fixed grinder (13) in a first direction of rotation (A1); and at least a step of cleaning the unloading compartment (27) of residues of ground product by means of rotation of said mobile grinder (14) with which the cleaning device (30) is associated, in a second direction of rotation (A2) opposite to said first direction of rotation (A1).

9. Grinding method as in claim 8, **characterized in that** the passage from said mainly grinding step in said first direction of rotation (A1) of the mobile grinder (14) to said cleaning step in said second direction of rotation (A2) occurs automatically when said mobile grinder (14) stops rotating in said first direction of rotation (A1).

10. Grinding method as in claim 8, **characterized in that** even during said first mainly grinding step the cleaning device (30) is active to remove possible residues of ground product at least from the unloading compartment (27).

## Patentansprüche

1. Vorrichtung zum Mahlen eines Produkts, das zunächst in Form von Körnchen, Körnern oder dergleichen vorliegt, aufweisend: einen Behälter (11) zum Aufnehmen des zu mahlenden Produkts, der mit einer Entladeöffnung (12) versehen ist, ein feststehendes Mahlteil (13), ein bewegbares Mahlteil (14), das mit einem Antriebsmotor (15) verbindbar ist, eine Mahlkammer (21), in der das feststehende Mahlteil (13) und das bewegbare Mahlteil (14) angeordnet sind und die mit einer Ausgabeöffnung (22) zum Ausgeben des gemahlenen Produkts versehen ist, wobei die Mahlkammer (21), das feststehende Mahlteil (13) und das bewegbare Mahlteil (14) ein Aufnahmefach (26), das mit der Entladeöffnung (12) in Verbindung gebracht wird, und ein Entladefach (27) definieren, das von dem Aufnahmefach (26) mittels Mahlzähnen (19, 20) des feststehenden und des bewegbaren Mahlteils (13, 14) getrennt ist und in Verbindung mit der Ausgabeöffnung (22) gebracht wird, wobei die Mahlvorrichtung ferner mindestens eine Reinigungsvorrichtung (30), die mit dem bewegbaren Mahlteil (14) assoziiert ist, und mindestens eine Steuereinheit (34) aufweist, **dadurch gekennzeichnet, dass** die Steuereinheit mit Umschaltmitteln versehen ist und mit dem Antriebsmotor (15) assoziiert ist, um zu bewirken, dass sich der bewegbare Mahlteil (14) in einer ersten Drehrichtung (A1), die hauptsächlich zum Mahlen ist, und alternativ in einer zweiten Drehrichtung (A2) zum Reinigen dreht, die zu der ersten Drehrichtung (A1) entgegengesetzt ist und geeignet ist, um das Ausgeben von in dem Entladefach (27) vorhandenen Mahlrückständen mittels der Reinigungsvorrichtung (30) zu ermöglichen.

2. Mahlvorrichtung gemäß Anspruch 1, **dadurch gekennzeichnet, dass** die Reinigungsvorrichtung (30) mindestens eine Reinigungsklinge (31) aufweist, die relativ zu einer radialen Richtung (R) der Reinigungsvorrichtung (30) symmetrisch ist.

3. Mahlvorrichtung gemäß Anspruch 2, **dadurch gekennzeichnet, dass** die Reinigungsklinge (31) mindestens einen Reinigungsteil (32) aufweist, der unter dem bewegbaren Mahlteil (14) positioniert ist und in der Lage ist, das Reinigen des Bodens (28) des Entladefachs (27) zu erleichtern.

4. Mahlvorrichtung gemäß Anspruch 2, **dadurch gekennzeichnet, dass** die Reinigungsklinge (31) mindestens einen Reinigungsteil (33) aufweist, der relativ zu der Reinigungsvorrichtung (30) radial hervorsteht und in der Lage ist, das Reinigen einer Seitenwand (29) des Entladefachs (27) zu erleichtern.

5. Mahlvorrichtung gemäß Anspruch 2, **dadurch gekennzeichnet, dass** die Reinigungsvorrichtung (30) eine Mehrzahl von Reinigungsklingen (31) aufweist, die in gleichem Abstand voneinander angeordnet sind.

6. Mahlvorrichtung gemäß Anspruch 5, **dadurch gekennzeichnet, dass** die Reinigungsvorrichtung (30) drei Reinigungsklingen (31) aufweist, die in einem Winkel (α) von etwa 120° zueinander im Abstand angeordnet sind.

7. Mahlvorrichtung gemäß Anspruch 1, **dadurch gekennzeichnet, dass** die Reinigungsvorrichtung (30) einen ringförmigen Träger (37) aufweist, der abnehmbar mit dem bewegbaren Mahlteil (14) verbindbar ist.

8. Mahlverfahren unter Verwendung einer Mahlvorrichtung gemäß irgendeinem vorhergehenden Anspruch, **dadurch gekennzeichnet, dass** es aufweist: einen Schritt des Einführens des zu mahlenden Produkts in den Behälter (11), der sich stromaufwärts des feststehenden Mahlteils (13) und des bewegbaren Mahlteils (14) befindet, mit der die Reinigungsvorrichtung (30) assoziiert ist, mindestens einen Schritt des hauptsächlichen Mahlens des zu mahlenden Produkts mittels des Drehens des bewegbaren Mahlteils (14) relativ zu dem feststehenden Mahlteil (13) in einer ersten Drehrichtung (A1) und mindestens einen Schritt des Reinigens des Entladefachs (27) von Rückständen des gemahlenen Produkts mittels Drehens des bewegbaren Mahlteils (14), mit dem die Reinigungsvorrichtung (30) assoziiert ist, in einer zweiten Drehrichtung (A2), die zu der ersten Drehrichtung (A1) entgegengesetzt ist.

9. Mahlverfahren gemäß Anspruch 8, **dadurch gekennzeichnet, dass** der Übergang von dem Hauptmahlschritt in der ersten Drehrichtung (A1) des bewegbaren Mahlteils (14) zu dem Reinigungsschritt in der zweiten Drehrichtung (A2) automatisch erfolgt, wenn der bewegbare Mahlteil (14) aufhört, sich in der ersten Drehrichtung (A1) zu drehen.

10. Mahlverfahren gemäß Anspruch 8, **dadurch gekennzeichnet, dass** selbst während des ersten Hauptmahlschrittes die Reinigungsvorrichtung (30) aktiv ist, um mögliche Rückstände von gemahlenem Produkt zumindest aus dem Entladefach (27) zu entfernen.

## Revendications

1. Appareil permettant de broyer un produit initialement sous forme de granulés, de grains ou similaires, comprenant: un récipient (11) destiné à contenir le produit à broyer et muni d'une ouverture de déchargement (12) ; un broyeur fixe (13); un broyeur mobile (14) pouvant être relié à un moteur d'entraînement (15) ; une chambre de broyage (21) dans laquelle se trouvent le broyeur fixe (13) et le broyeur mobile (14) et munie d'une ouverture de déchargement (22) pour décharger le produit broyé, ladite chambre de broyage (21), ledit broyeur fixe (13) et ledit broyeur mobile (14) définissant un compartiment de réception (26), mis en communication avec ladite ouverture de déchargement (12), et un compartiment de déchargement (27), séparé dudit compartiment de réception (26) au moyen des dents de broyage (19, 20) des broyeurs fixes et mobiles (13, 14) et mis en communication avec l'ouverture de déchargement (22), ledit appareil de broyage comprenant en outre au moins un dispositif de nettoyage (30), associé au broyeur mobile (14), et au moins une unité de commande (34), **caractérisé en ce que** l'unité de commande est pourvue de moyens de commutation, et associée au moteur d'entraînement (15) de manière à faire tourner ledit broyeur mobile (14) dans un premier sens de rotation (A1) qui est principalement destiné au broyage et, alternativement, dans un deuxième sens de rotation (A2) pour le nettoyage, opposé au premier sens de rotation (A1) et adapté pour permettre le déchargement des résidus de broyage présents dans la chambre de déchargement (27) au moyen dudit dispositif de nettoyage (30).

2. Appareil de broyage selon la revendication 1, **caractérisé en ce que** ledit dispositif de nettoyage (30) comprend au moins une lame de nettoyage (31) qui est symétrique par rapport à une direction radiale (R) dudit dispositif de nettoyage (30).

3. Appareil de broyage selon la revendication 2, **caractérisé en ce que** ladite lame de nettoyage (31) comprend au moins une partie de nettoyage (32) positionnée sous le broyeur mobile (14) et apte à faciliter le nettoyage du fond (28) dudit compartiment de déchargement (27).

4. Appareil de broyage selon la revendication 2, **caractérisé en ce que** ladite lame de nettoyage (31) comprend au moins une partie de nettoyage (33) faisant saillie radialement par rapport audit dispositif de nettoyage (30) et apte à faciliter le nettoyage d'une paroi latérale (29) dudit compartiment de déchargement (27).

5. Appareil de broyage selon la revendication 2, **caractérisé en ce que** ledit dispositif de nettoyage (30) comprend une pluralité de lames de nettoyage (31) espacées de manière égale l'une de l'autre.

6. Appareil de broyage selon la revendication 5, **caractérisé en ce que** ledit dispositif de nettoyage (30) comprend trois lames de nettoyage (31) espacées réciproquement selon un angle (α) d'environ 120°.

7. Appareil de broyage selon la revendication 1, **caractérisé en ce que** ledit dispositif de nettoyage (30) comprend un support annulaire (37) pouvant être connecté de manière amovible audit broyeur mobile (14).

8. Procédé de broyage utilisant un appareil de broyage selon l'une quelconque des revendications précédentes, **caractérisé en ce qu'il** comprend : une étape d'introduction du produit à broyer dans le réceptacle (11) situé en amont du broyeur fixe (13) et du broyeur mobile (14) auquel est associé le dispositif de nettoyage (30) ; au moins une étape de broyage principal du produit à broyer au moyen de la rotation du broyeur mobile (14) par rapport au broyeur fixe (13) dans un premier sens de rotation (A1) ; et au moins une étape de nettoyage du compartiment de déchargement (27) des résidus de produit broyé au moyen de la rotation dudit broyeur mobile (14) auquel le dispositif de nettoyage (30) est associé, dans un deuxième sens de rotation (A2) opposé audit premier sens de rotation (A1).

9. Procédé de broyage selon la revendication 8, **caractérisé en ce que** le passage de ladite étape de broyage principal dans ledit premier sens de rotation (A1) du broyeur mobile (14) à ladite étape de nettoyage dans ledit deuxième sens de rotation (A2) se produit automatiquement lorsque ledit broyeur mobile (14) cesse de tourner dans ledit premier sens de rotation (A1).

10. Procédé de broyage selon la revendication 8, **caractérisé en ce que** même pendant ladite première étape de broyage principal, le dispositif de nettoyage (30) est actif pour éliminer les éventuels résidus de produit broyé au moins du compartiment de déchargement (27).
